# EUROPEAN PATENT SPECIFICATION

(11) **EP 2 426 866 B1**
(45) Date of publication and mention of the grant of the patent: **04.09.2013**
(21) Application number: 10780018.7
(22) Date of filing: 20.04.2010
(51) Int. Cl.: H04Q 11/00

(54) **METHOD AND APPARATUS FOR AUTHENTICATION IN PASSIVE OPTICAL NETWORK AND PASSIVE OPTICAL NETWORK THEREOF**
AUTHENTIFIKATIONSVERFAHREN UND -VORRICHTUNG IN EINEM PASSIVEN OPTISCHEN NETZWERK UND PASSIVES OPTISCHES NETZWERK DAFÜR
PROCÉDÉ ET APPAREIL D'AUTHENTIFICATION DANS UN RÉSEAU OPTIQUE PASSIF ET RÉSEAU OPTIQUE PASSIF ASSOCIÉ

(30) Priority: 28.05.2009 CN 200910107749
(43) Date of publication of application: 07.03.2012
(73) Proprietor: Huawei Technologies Co., Ltd., Shenzhen, Guangdong 518129 (CN)
(72) Inventor: GAO, Bo, Shenzhen Guangdong 518129 (CN); LIN, Wei, Shenzhen Guangdong 518129 (CN)
(74) Representative: Thun, Clemens
(86) International application number: PCT/CN2010/071904
(87) International publication number: WO 2010/135936

(56) References cited:
- EP-A1- 1 830 517
- CN-A- 101 068 145
- CN-A- 101 083 589
- CN-A- 101 150 391
- JP-A- 2007 325 160
- US-A1- 2007 133 800

## Description

### FIELD OF THE INVENTION

The present invention relates to the field of network communication technologies, and in particular, to a method and an apparatus for authentication in a Passive Optical Network (PON), and a PON.

### BACKGROUND OF THE INVENTION

PON technology is a point-to-multipoint fiber access technology. A PON is generally composed of an Optical Line Terminal (OLT) in the central office, Optical Network Units (ONUs)/Optical Network Terminals (ONTs) at the user side, and an Optical Distribution Network (ODN). One PON port of the OLT may be accessed by multiple ONU/ONTs.

Currently, the authentication in the PON mainly includes authenticating the ONU/ONT by a terminal management device located in a core network through a terminal management protocol TR069, or authenticating the legality of the ONU/ONT on the OLT according to the password reported by the ONU/ONT.

Such case of only the legality of the ONU/ONT being authenticated in the process of authenticating the ONU/ONT is not secure, because the user data is vulnerable to leakage.

U.S. Patent Publication No. 2007/133800 provides a method for setting a security channel between an OLT and at least one ONU in an EPON, however, the method as provided in this document does not solve the above-mentioned technical problem.

### SUMMARY OF THE INVENTION

The technical problems to be solved by the embodiments of the present invention are to provide a method, a system and a terminal for authentication in a PON. By using logic registration IDs in the authentication process, the OLT authenticates the terminal automatically, and the ONU/ONT authenticates the OLT, which prevents illegal OLTs from obtaining user information and avoids leakage of user data.

To solve the technical problems mentioned above, the embodiments of the present invention are based on the following technical solutions:
A method for authenticating an ONU/ONT in a PON includes the following steps:
   receiving, by the ONU/ONT, a first negotiation message sent by an OLT, where the first negotiation message carries a logic registration ID of the OLT, and authenticating the OLT according to the logic registration ID of the OLT;
   sending, by the ONU/ONT, a second negotiation message to the OLT, where the second negotiation message carries a logic registration ID of the ONU/ONT, so that the OLT authenticates the ONU/ONT according to the logic registration ID of the ONU/ONT; and
   receiving, by the ONU/ONT, a terminal identifier which is sent by the OLT and allocated for the ONU/ONT after both the authentication on the ONU/ONT and the authentication on the OLT succeed.

An ONU/ONT located on a user side of a PON includes:
a logic registration ID receiving module, configured to receive a first negotiation message which is sent by an OLT and carries the logic registration ID of the OLT;
a matching module, configured to match the logic registration ID of the OLT received by the receiving module with the logic registration IDs of the OLTs authorized for access in the storage module, wherein a authentication of the OLT succeeds if the logic registration ID of the OLT matches the logic registration IDs of OLTs authorized for access;
a logic registration ID sending module, configured to send a second negotiation message which carries a logic registration ID of the ONU/ONT to the OLT, so that the OLT authenticates the ONU/ONT according to the logic registration ID of the ONU/ONT; and
a terminal identifier receiving module, configured to receive a terminal identifier which is sent by the OLT and allocated for the ONU/ONT.

An OLT located in the central office of a PON includes:
a storage module, configured to store a logic registration ID of the OLT;
a logic registration ID sending module, configured to send a first negotiation message which carries the logic registration ID of the OLT to the ONU/ONT, the logic registration ID of the OLT is used to enable the ONU/ONT authenticates the OLT;
a logic registration ID receiving module, configured to receive a second negotiation message from the ONU/ONT, which carries a logic registration ID of the ONU/ONT;
an authenticating module, configured to authenticate the ONU/ONT according to the logic registration ID of the ONU/ONT which is carried in the second negotiation message, and notify a terminal identifier allocating module to allocate a terminal identifier for the ONU/ONT after determining that the authentication on the OLT succeeds; and
the terminal identifier allocating module, configured to allocate the terminal identifier for the ONU/ONT as notified by the authenticating module, and send the allocated terminal identifier to the ONU/ONT.

A Passive Optical Network (PON) includes an OLT as mentioned above, and an ONU/ONT as mentioned above.

In the technical solutions of the present invention, the ONU/ONT receives the first negotiation message which carries the logic registration ID of the OLT and is sent by the OLT, and authenticates the OLT according to the logic registration ID of the OLT; further, the ONU/ONT sends its own logic registration ID to the OLT so that the OLT authenticates the ONU/ONT. After both the authentication on the ONU/ONT and the authentication on the OLT succeed, the ONU/ONT obtains a terminal identifier allocated for the ONU/ONT from the OLT. In this way, illegal OLTs (malicious OLTs) are prevented from obtaining user information, the leakage of user data is prevented, and the case in which a wrong OLT is accessed is prevented when multiple OLTs are included in the network where the ONU/ONT locates.

### BRIEF DESCRIPTION OF THE DRAWINGS

FIG. 1 is a flowchart of a first method embodiment according to embodiments of the present invention;
FIG. 2 is a flowchart of a second method embodiment according to embodiments of the present invention;
FIG. 3 is a schematic structural diagram of a system embodiment according to embodiments of the present invention;
FIG. 4 is a schematic structural diagram of a first apparatus embodiment according to embodiments of the present invention; and

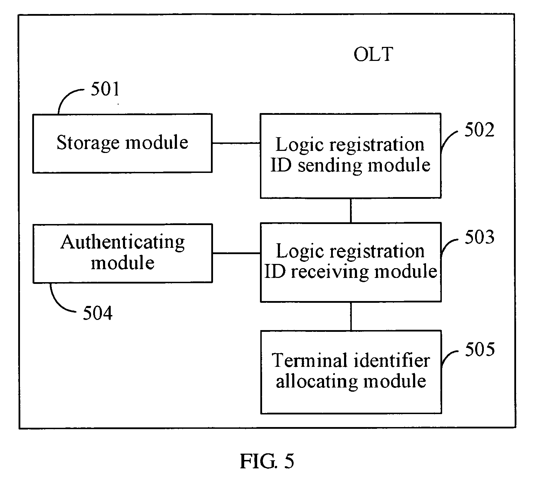

FIG. 5 is a schematic structural diagram of a second apparatus embodiment according to embodiments of the present invention.

### DETAILED DESCRIPTION OF THE EMBODIMENTS

The technical solutions in the embodiments of the present invention are described clearly and thoroughly below in conjunction with the accompanying drawings in the embodiments of the present invention. Evidently, the described embodiments are merely some of the embodiments of the present invention rather than all embodiments.

In the embodiments of the present invention, the ONU/ONT is discovered and authenticated automatically according to the logic registration ID of the ONU/ONT, and the OLT is discovered and authenticated according to the logic registration ID of the OLT, thus eliminating security threats in the authentication process in the prior art. The following expounds the method according to an embodiment of the present invention.

In the embodiments of the present invention, the ONU/ONT and the OLT each have their respective logic registration IDs. The OLT stores its own logic registration ID and the logic registration IDs of all legal ONU/ONTs; the ONU/ONT stores its own logic registration ID and the logic registration IDs of all legal OLTs. The logic registration IDs of the ONU/ONTs and the OLTs (including the logic registration IDs of the devices themselves and the legal devices) may be allocated by an operation administration system, or generated by the OLT dynamically. The operation administration system transmits the logic registration IDs allocated for the ONU/ONTs and the OLT to the OLT, and the OLT stores the logic registration IDs it receives. Meanwhile, the operation administration system transmits the logic registration ID of the ONU/ONT to a user. The logic registration IDs of the ONU/ONTs and the logic registration IDs of the OLTs should be unique in a certain area. That is, under a PON port, the logic registration ID of an ONU/ONT should be unique, and the logic registration ID of an OLT should be unique too. Moreover, the specific format of the logic registration ID may be decided by the operation administration system. The logic registration ID may be a password, or a logical identifier allocated by the operator as required, or information related to a device such as the OLT or the ONU/ONT, for example, a device type, a device version, a Media Access Control (MAC) address of the device, a port identifier of the device (such as PON port identifier of the OLT), and/or functions of the device, etc.

If a PON port identifier of the OLT serves as a logic registration ID of the OLT or a part of its logic registration ID, when a jumper wire error occurs in the installation, the ONU/ONT can discover the fault in time when authenticating the OLT, and notify the attendant in a specific mode (such as alarm or indicator). In this way, the fault can be located in the process of authentication. If the device type or device version of the OLT serves as a logic registration ID of the OLT or a part of its logic registration ID, the ONU/ONT can discover mismatch of the version or device type with that of the OLT in time when authenticating the OLT, and notify the attendant in a specific mode (such as alarm or indicator) to upgrade the version or replaces the ONU/ONT. In this way, potential problems are avoided at the time of authentication, and user satisfaction is improved. If the functions of the OLT serve as a logic registration ID of the OLT or a part of its logic registration ID, the ONU/ONT compares the functions supported by ONU/ONT with the logic registration ID of the OLT when authenticating the OLT, and decides whether to continue the registration according to the comparison result; or notifies important supported functions of the ONU/ONT to the attendant in a specific mode (such as alarm or indicator), which facilitates the attendant to decide to upgrade the version or to replace the device during the authentication.

The embodiments of the present invention do not restrict the specific style of the logic registration ID of the ONU/ONT and the OLT, and do not restrict which device generates the logic registration ID of the ONU/ONT and the OLT.

An embodiment of the present invention provides a method for authenticating a PON, the method includes:
An ONU/ONT receives a first negotiation message sent by an OLT, where the first negotiation message carries a logic registration ID of the OLT, and authenticates the OLT according to the logic registration ID of the OLT;
The ONU/ONT sends a second negotiation message to the OLT, where the second negotiation message carries a logic registration ID of the ONU/ONT, so that the OLT authenticates the ONU/ONT according to the logic registration ID of the ONU/ONT; and
The ONU/ONT receives a terminal identifier which is sent by the OLT and allocated for the ONU/ONT after both the authentication on the ONU/ONT and the authentication on the OLT succeed.

Further, the OLT authenticates the ONU/ONT according to the logic registration ID of the ONU/ONT and the information stored on the OLT; or

The OLT authenticates the ONU/ONT according to the logic registration ID of the ONU/ONT and remote server interaction information. When the OLT authenticates the ONU/ONT according to the remote server interaction message, the type of the interaction message may be the logic registration IDs or any other information so long as the information can be used for authenticating the ONU/ONT and ensure security of the authentication.

The following describes two exemplary embodiment of the method applied in specific scenarios.

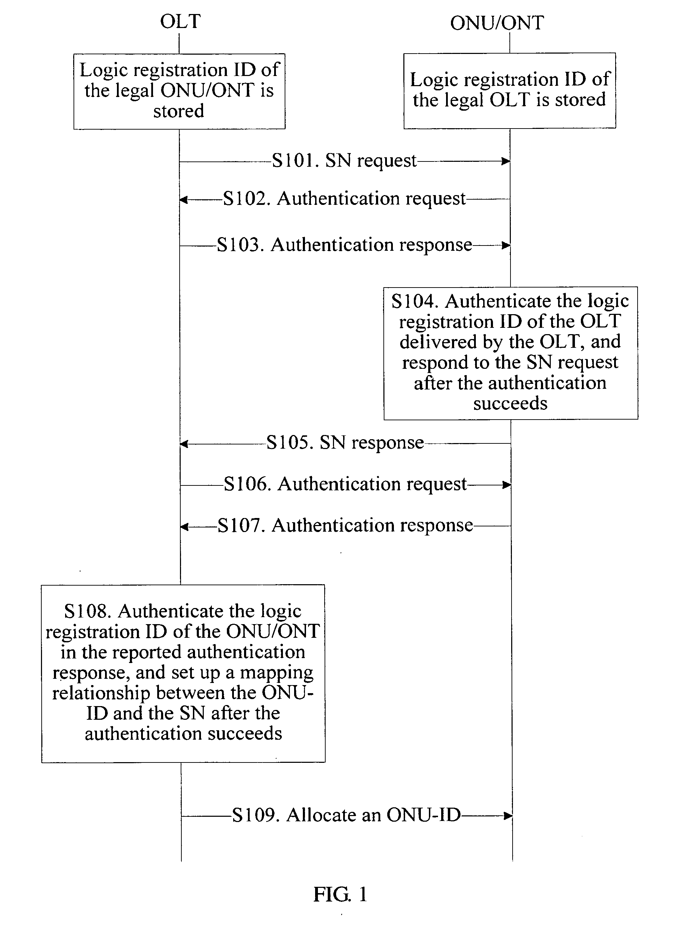

Embodiment 1: as shown in FIG. 1, the method includes the following steps:
S101: The OLT sends a request message to an unregistered ONU/ONT to request the ONU/ONT to report its Sequence Number (SN).
S 102: The ONU/ONT sends an authentication request to the OLT after receiving the request message from the OLT.

After receiving the request message from the OLT, the ONU/ONT needs to determine whether the OLT that sends the request message is legal (namely, authorized for access). In this case, an authentication request needs to be sent to the OLT, where the authentication request is used to request a logic registration ID from the OLT. The authentication request in the embodiment of the present invention may be an existing Physical Layer Operation Administration Maintenance (PLOAM) message, or a new message defined specially for transmitting the authentication request, provided that the authentication request message includes at least a message type (Message ID) field, which indicates that the authentication request is to request the logic registration ID of the OLT from the OLT.

Preferably, the authentication request in the embodiment of the present invention may be a PLOAM message. The structure of the PLOAM message may be as shown in Table 1:

**Table 1. Authentication Request PLOAM message**

| **Authentication Request PLOAM message** | | |
|---|---|---|
| **Byte** | **Content** | **Description** |
| 1 | ONU/ONT ID | Identifier of ONU/ONT/ONT |
| 2 | Message ID | Message ID |
| 3-12 | Reserved | |

In Table 1, the first byte "OLT ID" is an identifier of the ONU/ONT/ONT that sends the authentication request; the second byte "Message ID" serves to indicate that the message is an authentication request message; and bytes 3-12 are reserved bytes.

S103. After receiving the authentication request sent by the ONU/ONT, the OLT sends an authentication response which carries the logic registration ID of the OLT to the ONU/ONT.

After receiving the authentication request from the ONU/ONT, the OLT may use an existing PLOAM message to transmit the logic registration ID of the OLT to the ONU/ONT, or use a new message specially defined for transmitting its logic registration ID to the ONU/ONT. Moreover, in the process of transmitting the logic registration ID, the logic registration ID may or may not be transmitted in an encrypted mode (the encryption method is also applicable to the subsequent embodiments). The embodiment of the present invention does not restrict the specific style of the existing message, and does not restrict the structure of the newly defined message, provided that the authentication response message includes at least a message type field (Message ID) and a logic registration ID field (Register ID ).

Preferably, in the embodiment of the present invention, a PLOAM message is configured to transmit the logic registration ID of the OLT, and the specific structure of the PLOAM message may be as shown in Table 2:

**Table 2. PLOAM message for transmitting logic registration ID of OLT**

| **PLOAM message for transmitting logic registration ID of OLT** | | |
|---|---|---|
| **Byte** | **Content** | **Description** |
| 1 | ONU/ONT-ID | Identifier of ONU/ONT/ONT |
| 2 | Message ID | Message ID |
| 3 | Register ID | Logic registration ID (byte 1) |
| 4-11 | ... | ... |
| 12 | Register ID | Logic registration ID (byte 10) |

In Table 2, the first byte "ONU/ONT-ID" is an identifier of the ONU/ONT that receives the authentication response; the second byte "Message ID" serves to indicate that the message is a message for transmitting the logic registration ID; and bytes 3-12 serve to carry the logic registration ID of the OLT.

S104. After receiving the authentication response from the OLT, the ONU/ONT extracts the logic registration ID of the OLT from the authentication response, and matches it with the logic registration IDs of the legal OLTs stored in the ONU/ONT. If the logic registration IDs match, the authentication succeeds, and the procedure proceeds to S105; if the logic registration IDs do not match, the authentication fails, the ONU/ONT aborts subsequent registration and authentication process by, for example, making no response to the authentication request sent by the OLT, or by reporting no SN for an SN request received from the OLT. The authentication is ended.

S105. The ONU/ONT responds to the SN request sent by the OLT, and reports the SN of the ONU/ONT. The format of the message responding to the SN request is the same as that described in steps S102 and S103, but the content of the message carries at least the SN information of the ONU/ONT.

S 106. After receiving the SN of the ONU/ONT, the OLT sends an authentication request to the ONU/ONT. The authentication request is intended to authenticate the legality of the ONU/ONT.

After passing the authentication of the OLT by the ONU/ONT, the OLT needs to authenticate the legality of the ONU/ONT. By sending an authentication request to the ONU/ONT, the OLT requests the logic registration ID of the ONU/ONT from the ONU/ONT. The format of the authentication request message is the same as that described in step S102, but the content of the message is to request the logic registration ID of the ONU/ONT from the ONU/ONT.

S107. The ONU/ONT returns an authentication response that carries the logic registration ID of the ONU/ONT.

S 108. After receiving the authentication response from the ONU/ONT, the OLT extracts the logic registration ID of the ONU/ONT, and matches it with the logic registration IDs of the legal ONU/ONTs stored in the OLT. The authentication succeeds if the logic registration ID reported by the ONU/ONT matches the logic registration IDs of the legal ONU/ONTs stored in the OLT, and the OLT records the SN of the legal ONU/ONT, allocates an ONU/ONT-ID for the legal ONU/ONT, and binds the SN of the ONU/ONT to the ONU/ONT-ID of the ONU/ONT. The authentication fails if the logic registration ID reported by the ONU/ONT does not match the logic registration IDs of the legal ONU/ONTs stored in the OLT, and the OLT determines the ONU/ONT as illegal, and aborts the registration of the ONU/ONT.

S109. The OLT delivers the allocated ONU/ONT-ID to the ONU/ONT. By exchanging data with the ONU/ONT/ONT which is allocated the ONU/ONT-ID, the OLT registers the ONU/ONT. After the registration succeeds, the OLT configures service parameters for the successfully registered ONU/ONT/ONT by exchanging data with the successfully registered ONU/ONT/ONT.

Preferably, after the ONU/ONT is registered successfully through the above authentication process, in order to further enhance the security in normal use and prevent intrusion of malicious OLT in normal communication process, the ONU/ONT sends an authentication request to initiate the authentication of the OLT after receiving a request information sent by the OLT, such as an encryption key, an authentication password, or an authorization key. Alternatively, the ONU/ONT sends an authentication request autonomously at regular intervals to initiate the authentication of the OLT, and the OLT returns an authentication response which carries the logic registration ID of the OLT to the ONU/ONT after receiving the authentication request.

After receiving the authentication response from the OLT, the ONU/ONT extracts the logic registration ID from the authentication response, and matches this logic registration ID with the legal logic registration ID stored locally. If the logic registration IDs match, the authentication succeeds, and the ONU/ONT responds to the request or grant sent by the OLT; if the logic registration IDs do not match, the authentication fails, and the ONU/ONT does not respond to the information request or grant sent by the OLT.

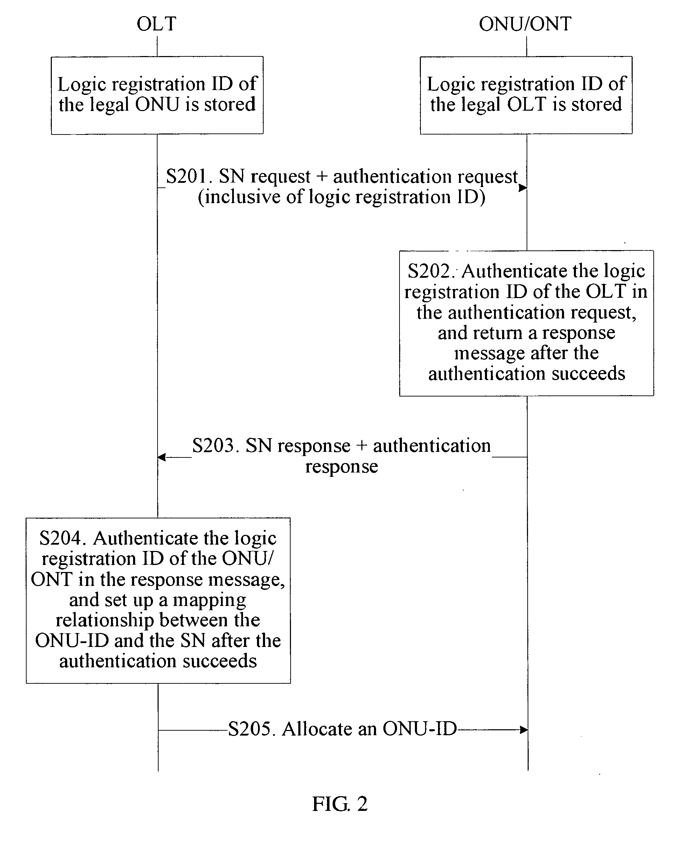

Embodiment 2: as shown in FIG. 2, the method includes the following steps:
S201. The OLT sends a request message to an ONU/ONT. The request message includes an SN request and an authentication request, and the authentication request carries the logic registration ID of the OLT.

The SN request sent by the OLT to the ONU/ONT carries the logic registration ID of the OLT, and is intended to request an SN from the ONU/ONT and request authentication of the OLT. The request message sent by the OLT may be an existing PLOAM message, or a new message defined specially for transmitting this request, provided that the request message includes at least a message type filed (Message ID) and a logic registration ID (Register ID).

Preferably, in the embodiment of the present invention, a PLOAM message serves to transmit the request message, and the specific structure of the PLOAM message is shown in Table 3:

**Table 3. Authentication Request PLOAM message for transmitting logical registration ID of OLT**

| **Authentication Request PLOAM message for transmitting logical registration ID of OLT** | | |
|---|---|---|
| **Byte** | **Content** | **Description** |
| 1 | ONU/ONT-ID | Identifier of ONU/ONT/ONT |
| 2 | Message ID | Message ID |
| 3 | Register ID | Logic registration ID (byte 1) |
| 4-11 | ... | ... |
| 12 | Register ID | Logic registration ID (byte 10) |

In Table 3, the first byte "ONU/ONT-ID" is an identifier of the ONU/ONT/ONT that receives the authentication request; the second byte "Message ID" serves to indicate that the message is an authentication request message which carries the logic registration ID of the OLT; and bytes 3-12 serve to carry the logic registration ID of the OLT.

S202. After receiving the request message from the OLT, the ONU/ONT extracts the logic registration ID of the OLT from the request message, and matches it with the logic registration IDs of the legal OLTs stored in the ONU/ONT. If the logic registration IDs match, the authentication succeeds, and the procedure proceeds to S203; if the logic registration IDs do not match, the authentication fails, and the ONU/ONT aborts subsequent registration and authentication process by, for example, making no response to the authentication request sent by the OLT, or by reporting no SN for an SN request received from the OLT. The authentication is ended.

S203. The ONU/ONT returns a response message after determining that the OLT is legal. The response message includes an SN response and an authentication response, the SN response at least carries an SN of the ONU/ONT, and the authentication response at least carries the message ID and the logic registration ID (Register ID) of the ONU/ONT. The format of the response message may be an existing PLOAM message, or a new message defined specially for transmitting the response message, provided that the response message at least carries the SN, the message ID, and the logic registration ID (Register ID) of the ONU/ONT. Preferably, in the embodiment of the present invention, the response message is a PLOAM message, as shown in Table 4:

**Table 4. PLOAM message for transmitting response message sent by ONU/ONT/ONT**

| **PLOAM message for transmitting response message sent by ONU/ONT/ONT** | | |
|---|---|---|
| **Byte** | **Content** | **Description** |
| 1 | ONU/ONT-ID | Identifier of ONU/ONT/ONT |
| 2 | Message ID | Message ID |
| 3-12 | SN | Sequence number |
| 13-22 | Register ID | Logic registration ID |

In Table 4, the first byte "ONU/ONT-ID" serves to indicate the identifier of the ONU/ONT which sends an SN response; the second byte "Message ID" serves to indicate that the message is an SN response message which carries the logic registration ID of the ONU/ONT/ONT; bytes 3-12 serve to carry the SN of the ONU/ONT/ONT; and bytes 13-22 carry the logic registration ID of the ONU/ONT/ONT.

S204. After receiving the response message from the ONU/ONT, the OLT extracts the logic registration ID of the ONU/ONT, and matches it with the logic registration IDs of the legal ONU/ONTs stored in the OLT. The authentication succeeds if the logic registration ID reported by the ONU/ONT matches the logic registration IDs of the legal ONU/ONTs stored in the OLT, and the OLT records the SN of the legal ONU/ONT, allocates an ONU/ONT-ID for the legal ONU/ONT, and binds the SN of the ONU/ONT to the ONU/ONT-ID of the ONU/ONT. The authentication fails if the logic registration ID reported by the ONU/ONT does not match the logic registration IDs of the legal ONU/ONTs stored in the OLT, and the OLT determines the ONU/ONT as illegal and aborts the registration of the ONU/ONT.

S205. The OLT delivers the allocated ONU/ONT-ID to the ONU/ONT. By exchanging data with the ONU/ONT which is allocated the ONU/ONT-ID, the OLT registers the ONU/ONT/ONT. After the registration succeeds, the OLT configures service parameters for the successfully registered ONU/ONT/ONT by exchanging data with the successfully registered ONU/ONT/ONT.

As revealed in the method embodiments above, it is not necessary to configure the terminal SNs statically in the OLT and the operation administration system in the embodiments of the present invention, but a logic registration ID is applied in the detection and registration process; after the authentication succeeds, the terminal SN obtained from the legal terminal is recorded, and the terminal ID allocated for the legal terminal is recorded, and therefore, the OLT can discover and authenticate the terminal automatically. The terminal SN and the terminal ID obtained by the OLT in the automatic discovery and authentication process are transmitted to the operation administration system, and therefore, the operation administration system can obtain the terminal SN and the terminal ID dynamically, which avoids the process of configuring the terminal SN and the terminal ID by the operation administration system statically. When a terminal needs to be replaced for reasons such as faults, the new terminal can use the logic registration ID of the replaced terminal, which avoids the process of updating the statically configured SN by the operation administration system brought about by replacing the terminal. The operation administration system can manage the terminal SN and the terminal ID dynamically, and can maintain the OLT and the terminal conveniently by using the dynamically obtained terminal SN and terminal ID. In this way, the costs of maintaining the operation administration system, the OLT, and the terminal are reduced, and the terminal can be discovered and authenticated more flexibly. Moreover, the ONU/ONT discovers and authenticates the OLT, which prevents an illegal OLT (malicious OLT) from stealing user information and prevents leakage of user data.

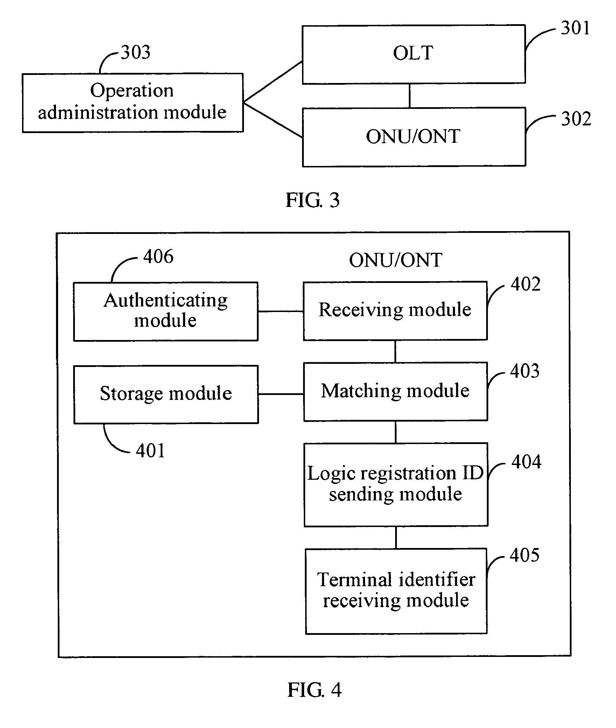

A third embodiment of the present invention provides a PON. The schematic structural diagram of the network system is as shown in FIG. 3. The system includes an ONU/ONT 302 that stores the logic registration IDs of the legal OLTs, and an OLT 301 that stores the logic registration IDs of the legal ONU/ONTs.

The ONU/ONT 302 is configured to receive a first negotiation message which is sent by the OLT 301 and carries the logic registration ID of the OLT 301, and authenticate the OLT according to the logic registration ID of the OLT 301.

The OLT 301 is configured to receive a second negotiation message which is sent by the ONU/ONT 302 and carries the logic registration ID of the ONU/ONT 302, and authenticate the ONU/ONT 302 according to the logic registration ID of the ONU/ONT 302.

After the authentication on both the ONU/ONT 302 and the authentication on the OLT 301 succeed, the OLT 301 sends a terminal identifier which is allocated for the ONU/ONT 302 to the ONU/ONT 302.

Further, the OLT 301 is further configured to authenticate the ONU/ONT 302 according to the logic registration ID of the ONU/ONT 302 and the information stored on the OLT 301; or

The OLT 301 authenticates the ONU/ONT 302 according to the logic registration ID of the ONU/ONT 302 and remote server interaction information.

The information stored in the OLT 301 may be logic registration IDs or any other information, so long as the information is enough for authenticating the ONU/ONT 302 and ensures security of the authentication. When the ONU/ONT 302 is authenticated according to the remote server interaction information, the specific type of the interaction message may be the logic registration IDs or any other information, so long as the information is enough for authenticating the ONU/ONT 302 and ensures security of the authentication.

The system may further include an operation administration apparatus 303, which is configured to generate the logic registration IDs of the legal OLTs and the logic registration IDs of the legal ONU/ONTs, send the logic registration IDs of the legal OLTs to the ONU/ONT 302 and send the logic registration IDs of the legal ONU/ONTs to the OLT 301. The functions of the operation administration apparatus 303 are the same as the functions of the operation administration system described above, and are not described in detail here. Further, the type and the format of the logic registration ID of the OLT and the ONU/ONT are the same as those described above, and are not described in detail here.

A fourth embodiment of the present invention provides an ONU/ONT which is located on a user side of a PON. As shown in FIG. 4, the ONU/ONT includes:
a storage module 401, configured to store logic registration IDs of legal OLTs;
a logic registration ID receiving module 402, configured to receive a first negotiation message sent by the OLT, where the first negotiation message carries the logic registration ID of the OLT;
a matching module 403, configured to match the logic registration ID of the OLT received by the receiving module 402 with the logic registration IDs of the OLTs authorized for access stored in the storage module 401;
a logic registration ID sending module 404, configured to send a second negotiation message which carries a logic registration ID of the ONU/ONT to the OLT, so that the OLT authenticates the ONU/ONT according to the logic registration ID of the ONU/ONT; and
a terminal identifier receiving module 405, configured to receive a terminal identifier which is sent by the OLT and allocated for the ONU/ONT, where the terminal identifier is sent after the authentication on both the ONU/ONT and the authentication on the OLT succeed.

The ONU/ONT may further include an authenticating module 406, which is configured to send an authentication request to the OLT to request the logic registration ID of the OLT. The type and the format of the logic registration ID are the same as those described above, and are not described in detail here.

An embodiment of the present invention further provides an OLT which is located in the central office of the PON. The OLT includes:
a storage module 501, configured to store the logic registration ID of the OLT;
a logic registration ID sending module 502, configured to send a first negotiation message which carries the logic registration ID of the OLT to the ONU/ONT, so that the ONU/ONT authenticates the OLT according to the logic registration ID of the OLT;
a logic registration ID receiving module 503, configured to receive a second negotiation message which carries a logic registration ID of the ONU/ONT and is returned by the ONU/ONT after the ONU/ONT succeeds in authenticating the OLT according to the logic registration ID of the OLT;
an authenticating module 504, configured to authenticate the ONU/ONT according to the logic registration ID of the ONU/ONT carried in the second negotiation message, and notify a terminal identifier allocating module to allocate a terminal identifier for the ONU/ONT after determining that the authentication on the OLT succeeds; and
the terminal identifier allocating module 505, configured to allocate the terminal identifier for the ONU/ONT as notified by the authenticating module, and send the allocated terminal identifier to the ONU/ONT.

Further, the storage module 501 is configured to store the logic registration IDs of the legal ONU/ONTs, and the authenticating module matches the logic registration ID of the ONU/ONT in the second negotiation message with the logic registration IDs stored in the storage module, and the authentication on the OLT succeeds if the logic registration IDs matches. The type of the logic registration ID is the same as that described in the method embodiment above, and is not described in detail here.

Persons of ordinary skill in the art should understand that all or part of the steps of the method under the present invention may be implemented by relevant hardware under the instruction of computer programs. The program may be stored in computer readable storage media. When the program runs, the program executes the method specified in any embodiment of the present invention above. The storage media may be a magnetic disk, an optical disk, Read-Only Memory (ROM), or Random Access Memory (RAM), etc.

## Claims

1. A method for authentication in a Passive Optical Network, PON, comprising:
receiving (103), by an Optical Network Unit /Optical Network Terminal, ONU/ONT, a first negotiation message sent by an Optical Line Terminal, OLT, wherein the first negotiation message carries a logic registration ID of the OLT,
authenticating (104), by the ONU/ONT, the OLT according to the logic registration ID of the OLT;
sending, by the ONU/ONT (107), a second negotiation message to the OLT, wherein the second negotiation message carries a logic registration ID of the ONU/ONT, the logic registration ID of the ONU/ONT is used to enable the OLT to authenticate the ONU/ONT; and
receiving, by the ONU/ONT (109), a terminal identifier sent by the OLT, wherein the terminal identifier is allocated for the ONU/ONT after both the authentication on the ONU/ONT and the authentication on the OLT succeeded.

2. The method according to claim 1, further comprising:
authenticating (108), by the OLT, the ONU/ONT according to the logic registration ID of the ONU/ONT and one of information stored on the OLT and remote server interaction information.

3. The method according to claim 2, further comprising:
receiving (101), by the ONU/ONT, a request message sent by the OLT for reporting a Serial Number, SN, before the ONU/ONT receives the first negotiation message sent by the OLT, and
sending (102), by the ONU/ONT, a first authentication request to the OLT upon receiving the request message for reporting the SN,
wherein the first authentication request is configured to request authentication on the OLT, and the first negotiation message received by the ONU/ONT from the OLT is an authentication response that carries the logic registration ID of the OLT.

4. The method according to claim 2, further comprising:
reporting (105), by the ONU/ONT, the SN of the ONU/ONT to the OLT after the ONU/ONT authenticates the OLT successfully.

5. The method according to claim 4, wherein the SN of the ONU/ONT is carried in the second negotiation message.

6. The method according to claim 1, wherein the logic registration ID of the OLT comprises: a device type of the OLT, version information of the OLT, a Media Access Control, MAC, address of the OLT, PON port information of the OLT, or function information of the OLT, or any combination thereof.

7. The method according to claim 1, wherein the logic registration ID of the OLT and the logic registration ID of the ONU/ONT is allocated by an operation administration system or generated by the OLT dynamically, wherein both the logic registration ID of the OLT and the logic registration ID of the ONU/ONT are unique in an PON port.

8. The method according to claim 1, wherein the authenticating, by the ONU/ONT, the OLT according to the logic registration ID of the OLT comprises:
extracting, by the ONU/ONT, the logic registration ID of the OLT from the authentication response after receiving the first negotiation message from the OLT; and
matching the logic registration ID of the OLT with logic registration IDs of legal OLTs stored in the ONU/ONT, wherein the authentication of the OLT succeeds when the logic registration ID of the OLT matches the logic registration IDs of legal OLTs.

9. An Optical Network Unit/Optical Network Terminal, ONU/ONT, comprising:
a logic registration ID receiving module (402), configured to receive a first negotiation message sent by an OLT and carrying a logic registration ID of the OLT;
a matching module (403), configured to match the logic registration ID of the OLT received by the receiving module with logic registration IDs of OLTs authorized for access, wherein an authentication of the OLT succeeds if the logic registration ID of the OLT matches the logic registration IDs of OLTs authorized for access;
a logic registration ID sending module (404), configured to send a second negotiation message which carries a logic registration ID of the ONU/ONT to the OLT, wherein the logic registration ID of the ONU/ONT is used to enable the OLT to authenticate the ONU/ONT; and
a terminal identifier receiving module (405), configured to receive a terminal identifier allocated for the ONU/ONT from the OLT.

10. The ONU/ONT according to claim 9, wherein the ONU/ONT further comprises an authenticating module (406), configured to send an authentication request to the OLT to request the logic registration ID of the OLT.

11. The ONU/ONT according to claim 10, wherein:
the logic registration ID of the OLT comprises: a device type of the OLT, version information of the OLT, a Media Access Control, MAC, address of the OLT, PON port information of the OLT, or function information of the OLT, or any combination thereof.

12. An Optical Line Terminal, OLT, comprising:
a logic registration ID sending module (502), configured to send a first negotiation message carrying a logic registration ID of the OLT to an Optical Network Unit /Optical Network Terminal, ONU/ONT, the logic registration ID of the OLT is used to enable the ONU/ONT to authenticate the OLT;
a logic registration ID receiving module (503), configured to receive a second negotiation message from the ONU/ONT, the second negotiation message carrying a logic registration ID of the ONU/ONT;
an authenticating module (504), configured to: authenticate the ONU/ONT according to the logic registration ID of the ONU/ONT in the second negotiation message; and
a terminal identifier allocating module (505), configured to allocate a terminal identifier for the ONU/ONT after the authenticating module determining that the authentication on the OLT succeeds, and send the allocated terminal identifier to the ONU/ONT.

13. The OLT according to claim 12, further comprising:
a storage module (501) configured to store logic registration ID of legal ONU/ONTs, and the authenticating module matches the logic registration ID of the ONU/ONT in the second negotiation message with the logic registration IDs of legal ONU/ONTs stored in the storage module, and determine that the authentication on the OLT succeeds if the logic registration IDs match.

14. The OLT according to claim 13, wherein:
the logic registration ID of the OLT comprises: a device type of the OLT, version information of the OLT, a Media Access Control, MAC, address of the OLT, PON port information of the OLT, or function information of the OLT, or any combination thereof.

15. A Passive Optical Network, PON, comprising:
an optical line terminal, OLT (301), according to any one of claims 12-14; and
an Optical Network Unit /Optical Network Terminal, ONU/ONT (302), according to any one of claims 9-11.

## Patentansprüche

1. Verfahren zur Authentifizierung in einem passiven optischen Netzwerk, PON, umfassend:
Empfangen (103) durch eine optische Netzwerkeinheit/ein optisches Netzwerkendgerät, ONU/ONT, einer ersten Verhandlungsnachricht, die durch ein optisches Leitungsendgerät, OLT, gesendet wird, wobei die erste Verhandlungsnachricht eine logische Registrierungs-ID des OLT befördert,
Authentifizieren (104) durch die/das ONU/ONT des OLT gemäß der logischen Registrierungs-ID des OLT;
Senden durch die/die/das ONU/ONT (107) einer zweiten Verhandlungsnachricht an das OLT, wobei die zweite Verhandlungsnachricht eine logische Registrierungs-ID der/des ONU/ONT befördert, wobei die logische Registrierungs-ID der/des ONU/ONT verwendet wird, um es dem OLT zu ermöglichen, die/die/das ONU/ONT zu authentifizieren; und
Empfangen durch die/di e/das ONU/ONT (109) einer durch das OLT g esendeten Endgerätekennung, wobei die Endgerätekennung für die/das ONU/ONT zugewiesen wird, nachdem sowohl die Authentifizierung an der/dem ONU/ONT als auch die Authentifizierung am OLT erfolgreich waren.

2. Verfahren nach Anspruch 1, das ferner Folgendes aufweist:
Authentifizieren (108) durch das OLT der/des ONU/ONT gemäß der logischen Registrierungs-ID der/des ONU/ONT und von am OLT gespeicherten Informationen oder Interaktionsinformationen eines entfernten Servers.

3. Verfahren nach Anspruch 2, das ferner Folgendes aufweist:
Empfangen (101) durch die/das ONU/ONT einer durch das OLT gesendeten Anforderungsnachricht zum Berichten einer Seriennummer, SN, bevor die/das ONU/ONT die durch das OLT gesendete erste Verhandlungsnachricht empfängt, und
Senden (102) durch die/das ONU/ONT einer ersten Authentifizierungsanforderung an das OLT beim Empfangen der Anforderungsnachricht zum Berichten der SN,
wobei die erste Authentifizierungsanforderung konfiguriert ist, eine Authentifizierung am OLT anzufordern, und die erste durch die/das ONU/ONT vom OLT empfangene Verhandlungsnachricht eine Authentifizierungsantwort ist, die die logische Registrierungs-ID des OLT befördert.

4. Verfahren nach Anspruch 2, das ferner Folgendes aufweist:
Berichten (105) durch die/das ONU/ONT der SN der/des ONU/ONT an das OLT, nachdem die/die/das ONU/ONT die OLT erfolgreich authentifiziert.

5. Verfahren nach Anspruch 4, wobei die SN der/des ONU/ONT in der zweiten Verhandlungsnachricht befördert wird.

6. Verfahren nach Anspruch 1, wobei die logische Registrierungs-ID des OLT Folgendes aufweist: einen Gerätetyp des OLT, Versionsinformationen des OLT, eine Medienzugriffssteuerungs-, bzw. MAC-Adresse des OLT, PON-Portinformationen des OLT oder Funktionsinformationen des OLT oder irgendeine Kombination davon.

7. Verfahren nach Anspruch 1, wobei die logische Registrierungs-ID des OLT und die logische Registrierungs-ID der/des ONU/ONT durch ein Betriebsadministrierungssystem zugewiesen wird oder durch das OLT dynamisch erzeugt wird, wobei sowohl die logische Registrierungs-ID des OLT als auch die logische Registrierungs-ID der/des ONU/ONT in einem PON-Port eindeutig sind.

8. Verfahren nach Anspruch 1, wobei das Authentifizieren durch die/die/das ONU/ONT des OLT gemäß der logischen Registrierungs-ID des OLT Folgendes aufweist:
Extrahieren durch die/die/das ONU/ONT der logischen Registrierungs-ID des OLT aus der Authentifizierungsantwort nach dem Empfangen der ersten Verhandlungsnachricht vom OLT; und
Abgleichen der logischen Registrierungs-ID des OLT mit logischen Registrierungs-IDs legaler OLTs, die in der/dem ONU/ONT gespeichert sind, wobei die Authentifizierung des OLT erfolgreich ist, wenn die logische Registrierungs-ID des OLT mit den logischen Registrierungs-IDs legaler OLTs übereinstimmt.

9. Optische Netzwerkeinheit/optisches Netzwerkendgerät, ONU/ONT, mit:
einem Empfangsmodul (402) für eine logische Registrierungs-ID, das konfiguriert ist, eine erste Verhandlungsnachricht zu empfangen, die durch ein OLT gesendet wird und eine logische Registrierungs-ID des OLT befördert;
einem Abgleichmodul (403), das konfiguriert ist, die durch das Empfangsmodul empfangene logische Registrierungs-ID des OLT mit logischen Registrierungs-IDs von OLTs abzugleichen, die für einen Zugang autorisiert sind, wobei eine Authentifizierung des OLT erfolgreich ist, wenn die logische Registrierungs-ID des OLT mit den logischen Registrierungs-IDs von OLTs übereinstimmt, die für einen Zugang autorisiert sind;
einem Sendemodul (404) für eine logische Registrierungs-ID, das konfiguriert ist, eine zweite Verhandlungsnachricht zu senden, die eine logische Registrierungs-ID der/des ONU/ONT zum OLT befördert, wobei die logische Registrierungs-ID der/des ONU/ONT verwendet wird, um es dem OLT zu ermöglichen, die/die/das ONU/ONT zu authentifizieren; und
einem Endgerätekennungsempfangsmodul (405), das konfiguriert ist, eine für die/die/das ONU/ONT zugewiesene Endgerätekennung vom OLT zu empfangen.

10. ONU/ONT nach Anspruch 9, wobei die/die/das ONU/ONT ferner ein Authentifizierungsmodul (406) aufweist, das konfiguriert ist, eine Authentifizierungsanforderung an das OLT zu senden, um die logische Registrierungs-ID des OLT anzufordern.

11. ONU/ONT nach Anspruch 10, wobei
die logische Registrierungs-ID des OLT Folgendes aufweist: einen Gerätetyp des OLT, Versionsinformationen des OLT, eine Medienzugriffssteuerungs- bzw. MAC-Adresse des OLT, PON-Portinformationen des OLT oder Funktionsinformationen des OLT oder irgendeine Kombination davon.

12. Optisches Leitungsendgerät, OLT, mit:
einem Sendemodul (502) für eine logische Registrierungs-ID, das konfiguriert ist, eine erste Verhandlungsnachricht, die eine logische Registrierungs-ID des OLT befördert, an eine optische Netzwerkeinheit/ein optisches Netzwerkendgerät, ONU/ONT, zu senden, wobei die logische Registrierungs-ID des OLT verwendet wird, es der/dem ONU/ONT zu ermöglichen, das OLT zu authentifizieren;
einem Empfangsmodul (503) für eine logische Registrierungs-ID, das konfiguriert ist, eine zweite Verhandlungsnachricht von der/dem ONU/ONT zu empfangen, wobei die zweite Verhandlungsnachricht eine logische Registrierungs-ID der/des ONU/ONT befördert;
einem Authentifizierungsmodul (504), das konfiguriert ist, die/die/das ONU/ONT gemäß der logischen Registrierungs-ID der/des ONU/ONT in der zweiten Verhandlungsnachricht zu authentifizieren; und
einem Endgerätekennungszuweisungsmodul (505), das konfiguriert ist, eine Endgerätekennung für die/die/das ONU/ONT zuzuweisen, nachdem das Authentifizierungsmodul feststellt, dass die Authentifizierung am OLT erfolgreich ist, und die zugewiesene Endgerätekennung an die/die/das ONU/ONT zu senden.

13. OLT nach Anspruch 12, das ferner Folgendes aufweist:
ein Speichermodul (501), das konfiguriert ist, eine logische Registrierungs-ID legaler ONU/ONTs zu speichern, wobei das Authentifizierungsmodul die logische Registrierungs-ID der/des ONU/ONT in der zweiten Verhandlungsnachricht mit im Speichermodul gespeicherten logischen Registrierungs-IDs legaler ONU/ONTs abgleicht, und festzustellen, dass die Authentifizierung am OLT erfolgreich ist, wenn die logischen Registrierungs-IDs übereinstimmen.

14. OLT nach Anspruch 13, wobei
die logische Registrierungs-ID des OLT Folgendes aufweist: einen Gerätetyp des OLT, Versionsinformationen des OLT, eine Medienzugriffssteuerungs- bzw. MAC-Adresse des OLT, PON-Portinformationen des OLT oder Funktionsinformationen des OLT oder irgendeine Kombination davon.

15. Passives optisches Netzwerk, PON, mit:
einem optischen Leitungsendgerät, OLT (301), nach einem der Ansprüche 12 bis 14; und
einer optischen Netzwerkeinheitleinem optischen Netzwerkendgerät, ONU/ONT (302), nach einem der Ansprüche 9 bis 11.

## Revendications

1. Procédé d'authentification dans un Réseau Optique Passif, PON (Passive Optical Network), comprenant :
la réception (103), par une Unité de Réseau Optique/un Terminal de Réseau Optique, ONU/ONT (Optical Network Unit/Optical Network Terminal), d'un premier message de négociation envoyé par un Terminal de Ligne Optique, OLT (Optical Line Terminal), dans lequel le premier message de négociation achemine un identifiant, ID, d'enregistrement logique de l'OLT,
l'authentification (104), par l'ONU/ONT, de l'OLT conformément à l'ID d'enregistrement logique de l'OLT,
l'envoi, par l'ONU/ONT (107), d'un second message de négociation à l'OLT, le second message de négociation acheminant un ID d'enregistrement logique de l'ONU/ONT, l'ID d'enregistrement logique de l'ONU/ONT étant utilisé pour permettre à l'OLT d'authentifier l'ONU/ONT ; et
la réception, par l'ONU/ONT (109), d'un identifiant de terminal envoyé par l'OLT, l'identifiant de terminal étant alloué pour l'ONU/ONT après que l'authentification effectuée sur l'ONU/ONT et l'authentification effectuée sur l'OLT ont réussi.

2. Procédé selon la revendication 1, comprenant en outre :
l'authentification (108), par l'OLT, de l'ONU/ONT conformément à l'ID d'enregistrement logique de l'ONU/ONT et à l'une d'informations stockées sur l'OLT et d'informations d'interaction de serveur distant.

3. Procédé selon la revendication 2, comprenant en outre :
la réception (101), par l'ONU/ONT, d'un message de demande envoyé par l'OLT pour signaler un Numéro de Série, SN (Serial Number), avant que l'ONU/ONT reçoive le premier message de négociation envoyé par l'OLT, et
l'envoi (102), par l'ONU/ONT, d'une première demande d'authentification à l'OLT lors de la réception du message de demande de signalement du SN,
dans lequel la première demande d'authentification est configurée pour demander une authentification sur l'OLT, et le premier message de négociation reçu par l'ONU/ONT en provenance de l'OLT est une réponse d'authentification qui achemine l'ID d'enregistrement logique de l'OLT.

4. Procédé selon la revendication 2, comprenant en outre :
le signalement (105), par l'ONU/ONT, du SN de l'ONU/ONT à l'OLT après que l'ONU/ONT a réussi à authentifier l'OLT.

5. Procédé selon la revendication 4, dans lequel le SN de l'ONU/ONT est acheminé dans le second message de négociation.

6. Procédé selon la revendication 1, dans lequel l'ID d'enregistrement logique de l'OLT comprend : un type de dispositif de l'OLT, des informations de version de l'OLT, une adresse de Contrôle d'Accès au Support, MAC (Media Access Control), de l'OLT, des informations de port PON de l'OLT, ou des informations de fonction de l'OLT, ou une combinaison quelconque de ceux-ci.

7. Procédé selon la revendication 1, dans lequel l'ID d'enregistrement logique de l'OLT et l'ID d'enregistrement logique de l'ONU/ONT sont alloués par un système d'administration d'opérations ou sont générés dynamiquement par l'OLT, l'ID d'enregistrement logique de l'OLT et l'ID d'enregistrement logique de l'ONU/ONT étant tous deux uniques dans un port PON.

8. Procédé selon la revendication 1, dans lequel l'authentification par l'ONU/ONT de l'OLT conformément à l'ID d'enregistrement logique de l'OLT comprend :
l'extraction, par l'ONU/ONT, de l'ID d'enregistrement logique de l'OLT de la réponse d'authentification après réception du premier message de négociation en provenance de l'OLT ; et
la comparaison de l'ID d'enregistrement logique de l'OLT avec des ID d'enregistrements logiques d'OLT légaux stockés dans l'ONU/ONT, l'authentification de l'OLT réussissant lorsque l'ID d'enregistrement logique de l'OLT concorde avec les ID d'enregistrements logiques d'OLT légaux.

9. Unité de Réseau Optique/Terminal de Réseau Optique, ONU/ONT, comprenant :
un module de réception d'ID d'enregistrement logique (402), configuré pour recevoir un premier message de négociation envoyé par un OLT et acheminant un ID d'enregistrement logique de l'OLT ;
un module de comparaison (403), configuré pour comparer l'ID d'enregistrement logique de l'OLT reçu par le module de réception à des ID d'enregistrements logiques d'OLT autorisés à effectuer un accès, une authentification de l'OLT réussissant si l'ID d'enregistrement logique de l'OLT concorde avec les ID d'enregistrements logiques d'OLT autorisés à effectuer un accès ;
un module d'envoi d'ID d'enregistrement logique (404), configuré pour envoyer un second message de négociation qui achemine un ID d'enregistrement logique de l'ONU/ONT à l'OLT, l'ID d'enregistrement logique de l'ONU/ONT étant utilisé pour permettre à l'OLT d'authentifier l'ONU/ONT ; et
un module de réception d'identifiant de terminal (405), configuré pour recevoir un identifiant de terminal alloué à l'ONU/ONT en provenance de l'OLT.

10. ONU/ONT selon la revendication 9, dans lequel l'ONU/ONT comprend en outre un module d'authentification (406), configuré pour envoyer une demande d'authentification à l'OLT afin de demander l'ID d'enregistrement logique de l'OLT.

11. ONU/ONT selon la revendication 10, dans lequel :
l'ID d'enregistrement logique de l'OLT comprend : un type de dispositif de l'OLT, des informations de version de l'OLT, une adresse de Contrôle d'Accès a u Support, MAC, de l'OLT, des informations de port PON de l'OLT, ou des informations de fonction de l'OLT, ou une combinaison quelconque de ceux-ci.

12. Terminal de Ligne Optique, OLT, comprenant :
un module d'envoi d'ID d'enregistrement logique (502), configuré pour envoyer un premier message de négociation acheminant un ID d'enregistrement logique de l'OLT à une Unité de Réseau Optique/un Terminal de Réseau Optique, ONU/ONT, l'ID d'enregistrement logique de l'OLT étant utilisé pour permettre à l'ONU/ONT d'authentifier l'OLT ;
un module de réception d'ID d'enregistrement logique (503), configuré pour recevoir un second message de négociation en provenance de l'ONU/ONT, le second message de négociation acheminant un ID d'enregistrement logique de l'ONU/ONT ;
un module d'authentification (504), configuré pour : authentifier l'ONU/ONT conformément à l'ID d'enregistrement logique de l'ONU/ONT dans le second message de négociation ; et
un module d'allocation d'identifiant de terminal (505), configuré pour allouer un identifiant de terminal pour l'ONU/ONT après que le module d'authentification a déterminé que l'authentification effectuée sur l'OLT a réussi, et envoyer l'identifiant de terminal alloué à l'ONU/ONT.

13. OLT selon la revendication 12, comprenant en outre :
un module de stockage (501) configuré pour stocker un ID d'enregistrement logique d'ONU/ONT légaux, et le module d'authentification compare l'ID d'enregistrement logique de l'ONU/ONT contenu dans le second message de négociation à des ID d'enregistrements logiques d'ONU/ONT légaux stockés dans le module de stockage,
et déterminer que l'authentification effectuée sur l'OLT a réussi si les ID d'enregistrements logiques concordent.

14. OLT selon la revendication 13, dans lequel :
l'ID d'enregistrement logique de l'OLT comprend : un type de dispositif de l'OLT, des informations de version de l'OLT, une adresse de Contrôle d'Accès au Support, MAC, de l'OLT, des informations de port PON de l'OLT, ou des informations de fonction de l'OLT, ou une combinaison quelconque de ceux-ci.

15. Réseau Optique Passif, PON, comprenant :
un terminal de ligne optique, OLT, (301), selon l'une quelconque des revendications 12-14 ; et
une Unité de Réseau Optique/un Terminal de Réseau Optique, ONU/ONT (302), selon l'une quelconque des revendications 9-11.
